# EUROPEAN PATENT SPECIFICATION

(11) **EP 2 072 319 B1**
(45) Date of publication and mention of the grant of the patent: **10.04.2013**
(21) Application number: 07425809.6
(22) Date of filing: 19.12.2007
(51) Int. Cl.: B60K 37/06

(54) **Support for control units, in particular for vehicle control units and wire bundles**
Halterung für Leitgeräte, insbesondere für Fahrzeugleitgeräte und Kabelbündel
Support pour unités de contrôle, en particulier pour unités de contrôle et faisceaux de câbles de véhicule

(43) Date of publication of application: 24.06.2009
(73) Proprietor: Iveco S.p.A., 10156 Torino (IT)
(72) Inventor: Raviola, Claudio, 10040 Rivalta di Torino (IT); Corsi, Jacopo, 10141 Torino (IT)
(74) Representative: Borsano, Corrado

(56) References cited:
- GB-A- 2 381 289
- US-A- 3 662 850
- US-A1- 2001 016 432
- US-A1- 2003 141 738

## Description

This invention relates to a support for control units, in particular for vehicle control units and wire bundles.

The management and control units of vehicles are increasingly numerous and powerful, thanks to the newer and newer safety and control systems that have been introduced.

Generally, the number of control units on a vehicle may be rather high according to the newness of the considered vehicle. These control units are traditionally arranged and fixed behind the walls of the dashboard. Numerous wire bundles have to be attached to each of these control units, and avoiding wire tangles is often complicated.

Moreover, an additional critical problem is the assembling and the disassembling of the control unit from the dashboard. These operations force the operators to work in an uncomfortable position under the dashboard, for a lot of time and without sufficient lighting, trying to connect/disconnect the fixing elements of the dashboard and the wires of the control units.

The control units are usually shaped like a flat parallelepiped, so they are laid down flat along a surface of the dashboard or of part of it. Therefore another critical problem is connected to the fixing of the wire bundles, which have to be fastened in order to prevent their vibration, guaranteeing a higher durability of the wire bundles and a higher acoustic comfort in the cabin. It is often quite difficult to fasten said wire bundles, because, for example, a wire bundle which is connected to a first control unit, has to pass over a second control unit in order to be connected to a third one. Therefore the support for said wire bundle has to be placed near the control unit being passed over, an operation that is often difficult and expensive.

US-3662850-A discloses a mounting structure for instruments, switches or the like in a road vehicle, with a horizontal plate including a plurality of rectangular apertures with aligned recesses. The switches or the like are inserted in the plate through their respective apertures until engaging in their respective recesses. The switches project downwardly from the dashboard of the vehicle, and are free to pivot relative to the frame. In order to disassemble the switches, the latter are first disengaged from their front side, then pivoted around respective pegs, then pulled down.

The aim of this invention is to provide a support for control units, in particular vehicle control units and wire bundles.

Therefore, the aim of this invention is to achieve the purposes explained above by means of a support for control units, in particular for vehicle control units and wire bundles, according to claim 1.

According to another embodiment of the invention said device may be added to a wire distributor which avoids the tangle of the wires themselves and simplifies the assembling and the disassembling of the control units.

The dependent claims describe the preferred embodiments of the invention, and are an integral part of this description.

Further characteristics and advantages of the invention will be more apparent in light of a detailed description of a preferred, but non-exclusive, embodiment of a support for control units, in particular for vehicle control units and wire bundles, shown with the help of the drawings that are attached hereto, which are merely illustrative and not limitative, in which:
- Fig. 1 shows a disassembled support for control units;
- Fig. 2 shows a top view of an horizontal section of the assembled support;
- Fig. 3 shows a front view with its sections of an element 1 comprised in the support for control units;
- Fig. 4 shows a distributor of wires and wire bundles;
- Fig. 5 shows a front view of a support for control units assembled with the control units and a wire distributor;
- Fig. 6 shows a top lateral view of the previous figure.

In the drawings the same reference numbers and letters identify the same elements or components.

A support for control units, according to the figures, comprises:
- at least one element 1 suitable for supporting at least one control unit 4;
- an essentially flat panel 3;
- at least a shelf 2, suitable for supporting the element 1, and integral and perpendicular with the side 3a of the panel 3;
- connection means, in order to assemble the control units with said element 1 and to connect said element 1 with said shelf 2.

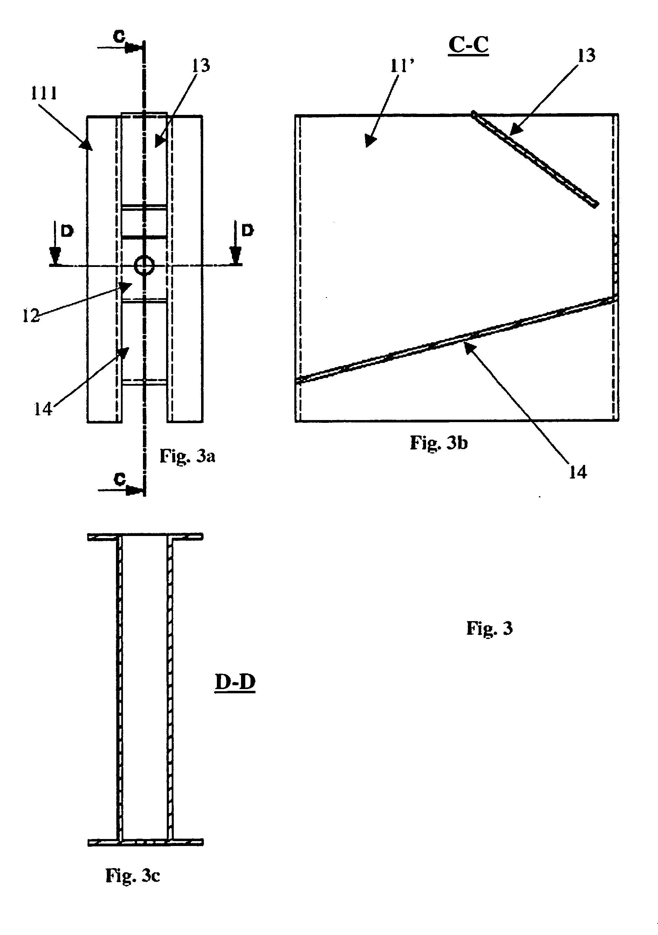

In a preferred embodiment said element 1, as shown in figure 3a, is shaped like an H, in order to be particularly suitable for supporting a pair of control units 4 put next to the vertical arms 11 and 11'. Moreover, the horizontal arm 12, which comprises a through hole, is suitable for the assembling with the extremity 21 of the shelf, for example by means of a screw 5.

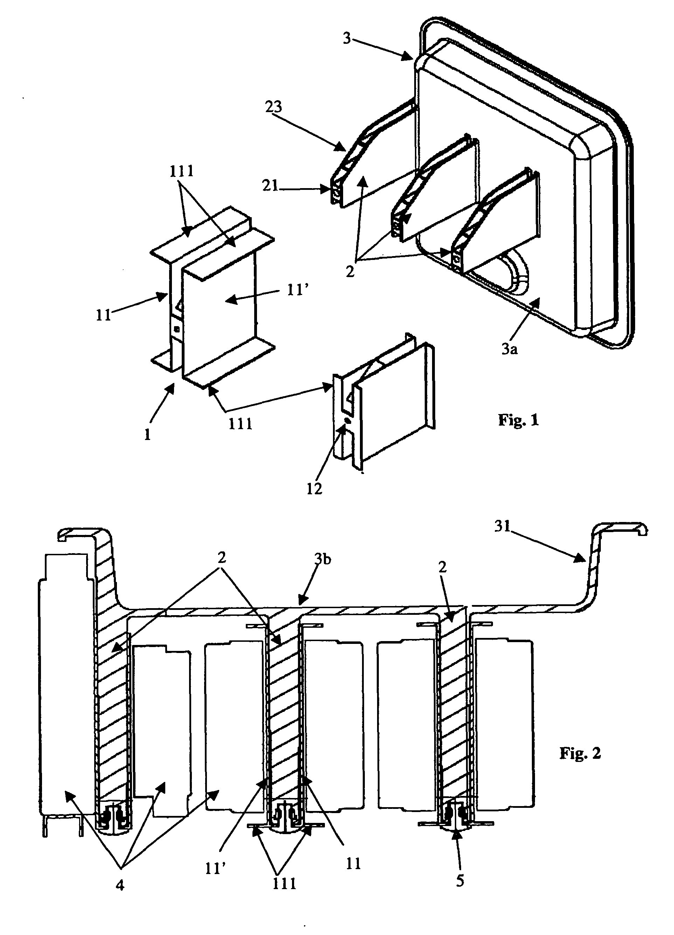

Each vertical arm 11 and 11', defines an essentially flat surface, as shown in fig. 1 A pair of edges 111 of said surface are folded in order to make a right angle toward the outside, this allows the assembling of each control unit with each vertical arm.

From the section view of fig. 3b it is noted a plate 13 connecting the flat surfaces defined by said arms 11 and 11'. Said plate is oblique in the example, but it may also be horizontal. Therefore in the example the upper surface 23 of the shelf 2 is oblique in order to cooperate with said plate 13 allowing the shifting of the weight to it, as to minimize the shearing stress on said screw 5. An additional plate 14, suitable for connecting said arms 11 and 11', has the function to strengthen said element 1.

Fig. 2 shows a top view of an horizontal section, at the level of the screw 5, of the assembled support.

The panel 3 may comprise a beading 31 suitable for improving the adherence with a portion of the dashboard of a vehicle.

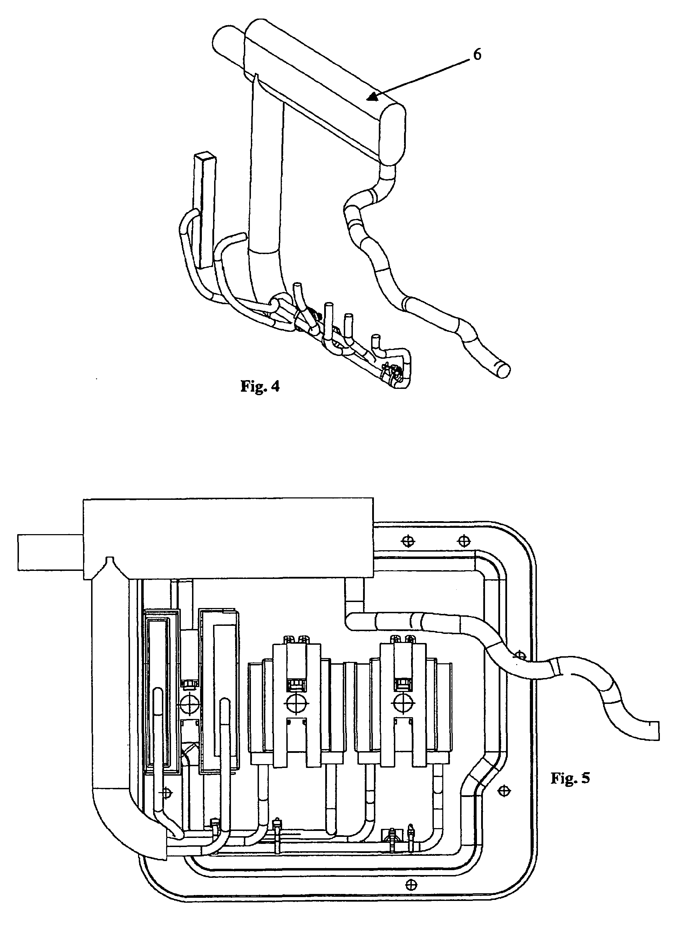

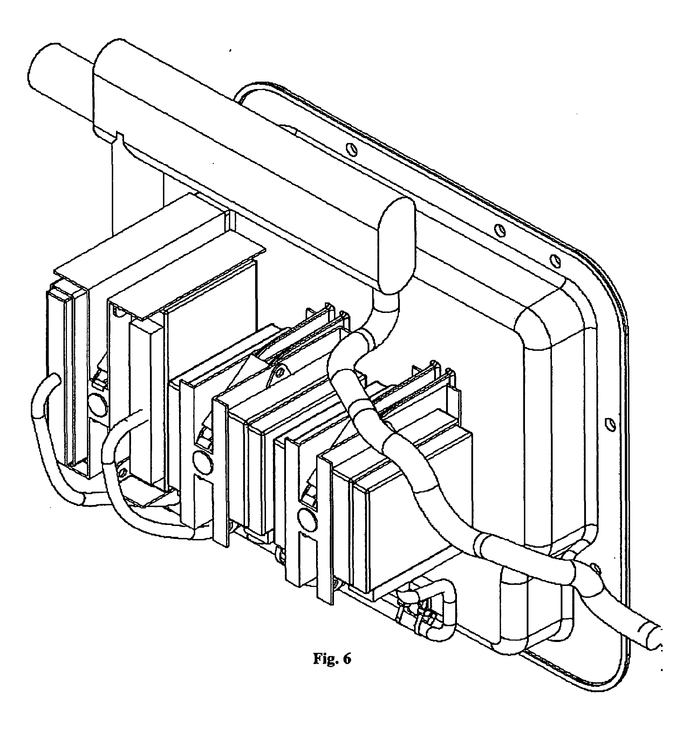

Figure 4 shows a preferred embodiment of a wire and wire bundle distributor 6, with the function to simplify the electrical connection with and between the control units on the support. In particular, this wire distributor brings the wires to the control units both from the top and from the bottom, in order to avoid tangles and to limit the presence of free wire segments which vibrate and oscillate. Figures 5 and 6 show an example of the assembling of the support according to this invention, complete with control units and wire distributor 6.

Said support is advantageously inserted in a subsidiary opening of the vehicle's dashboard or of a portion of said dashboard, as to leave the control units inside the dashboard, while only the side 3b of the panel is visible from outside.

The particular embodiments described here do not limit the scope of this invention which covers all the alternative embodiments defined by the claims.

## Claims

1. Support for control units, in particular for vehicle control units and wire bundles, comprising:
- an essentially flat panel (3), **characterized in that**, it comprises further
- at least one vertical shelf (2) integral and perpendicular with respect to the front side (3a) of the panel (3);
- at least one H-shaped element (1) comprising two vertical arms (11, 11') connected through a central front horizontal arm (12), each of said vertical shelf (2) being inside and supporting a respective H-shaped element (1) and being fixed to said central front horizontal arm (12), whereby
- said control units are fixable laterally to the external sides of the vertical arms (11, 11') of the H-shaped elements (1).

2. Support according to claim 1, wherein said H-shaped element (1) comprises in the horizontal arm (12) a through hole suitable for the assembling with an extremity (21) of the vertical shelf (2) by means of connection means (5).

3. Support according to claim 1, wherein said two vertical arms (11, 11') define flat surfaces comprising at least a pair of edges (111) folded in order to make a right angle toward the outside.

4. Support according to claim 1, comprising a first plate (13) to connect the vertical arms (11, 11') and to cooperate with the higher surface (23) of the vertical shelf (2) to shift the weight of the element (1) and of a pair of control units (4) to it.

5. Support according to claim 1, comprising a second plate (14) to further connect said vertical arms (11, 11').

6. Support according to claim 1, wherein said panel (3) comprises a beading (31) suitable for improving the adherence with a portion of the dashboard of a vehicle.

7. Support according to claim 1, also comprising a distributor (6) of wires and wire bundles, to perform the electrical connection with and between the control units on the support, said distributor (6) bringing the wires to the control units from the top and/or from the bottom of the panel (3).

8. Vehicle comprising a support for control unit according to any of the previous claims.

## Patentansprüche

1. Halterung für Steuereinheiten, insbesondere für Fahrzeugsteuereinheiten und Kabelbündel, umfassend:
- eine im Wesentlichen flache Tafel (3), **dadurch gekennzeichnet, dass** sie ferner umfasst:
- zumindest eine vertikale Stütze (2) einstückig und senkrecht mit Bezug auf die Vorderseite (3a) der Tafel (3);
- zumindest ein H-förmiges Element (1), das zwei vertikale Arme (11, 11') umfasst, die durch einen zentralen, vorderen, horizontalen Arm (12) verbunden sind, wobei jede vertikale Stütze (2) sich innerhalb eines entsprechenden H-förmigen Elements (1) befindet und dieses abstützt und an dem zentralen, vorderen, horizontalen Arm (12) befestigt ist, wobei
- die Steuereinheiten seitlich an den Außenseiten der vertikalen Arme (11, 11') der H-förmigen Elemente (1) fixierbar sind.

2. Halterung nach Anspruch 1, wobei das H-förmige Element (1) in dem horizontalen Arm (12) ein Durchgangsloch umfasst, das zum Zusammenbau mit einem Ende (21) der vertikalen Stütze (2) mittels Verbindungsmitteln (5) geeignet ist.

3. Halterung nach Anspruch 1, wobei die zwei vertikalen Arme (11, 11') ebene Flächen definieren, die zumindest ein Paar Ränder (111) umfassen, die umgeschlagen sind, um nach außen hin einen rechten Winkel zu bilden.

4. Halterung nach Anspruch 1, die eine erste Platte (13) umfasst, um die vertikalen Arme (11, 11') zu verbinden und mit der höheren Fläche (23) der vertikalen Stütze (2) zusammenzuarbeiten, um das Gewicht des Elements (1) und eines Paares Steuereinheiten (4) zu ihr zu verschieben.

5. Halterung nach Anspruch 1, die eine zweite Platte (14) umfasst, um die vertikalen Arme (11, 11') weiter zu verbinden.

6. Halterung nach Anspruch 1, wobei die Tafel (3) eine Bördelung (31) umfasst, die zur Verbesserung der Anhaftung an einem Abschnitt des Armaturenbretts eines Fahrzeugs geeignet ist.

7. Halterung nach Anspruch 1, die auch einen Verteiler (6) für Kabel und Kabelbündel umfasst, um die elektrische Verbindung mit und zwischen den Steuereinheiten auf der Halterung durchzuführen, wobei der Verteiler (6) die Kabel von der Oberseite und/oder der Unterseite der Tafel (3) zu den Steuereinheiten bringt.

8. Fahrzeug, das eine Halterung für eine Steuereinheit nach einem der vorhergehenden Ansprüche umfasst.

## Revendications

1. Support pour unités de commande, en particulier pour unités de commande et faisceaux de fils de véhicule, comprenant :
- un panneau essentiellement plat (3), **caractérisé en ce qu'**il comprend en outre
- au moins une tablette verticale (2) solidaire et perpendiculaire par rapport au côté avant (3a) du panneau (3) ;
- au moins un élément en forme de H (1) comprenant deux bras verticaux (11, 11') raccordés par l'intermédiaire d'un bras horizontal avant central (12), chacune desdites tablettes verticales (2) étant à l'intérieur et supportant un élément en forme de H (1) respectif et étant fixée audit bras horizontal avant central (12), moyennant quoi
- lesdites unités de commande peuvent être fixées latéralement aux côtés externes des bras verticaux (11, 11') des éléments en forme de H (1).

2. Support selon la revendication 1, dans lequel ledit élément en forme de H (1) comprend dans le bras horizontal (12) un trou traversant convenant à l'assemblage avec une extrémité (21) de la tablette verticale (2) au moyen d'un moyen de raccordement (5).

3. Support selon la revendication 1, dans lequel lesdits deux bras verticaux (11, 11') définissent des surfaces plates comprenant au moins une paire de bords (111) pliés afin de faire un angle droit vers l'extérieur.

4. Support selon la revendication 1, comprenant une première plaque (13) pour raccorder les bras verticaux (11 ,11') et pour coopérer avec la surface supérieure (23) de la tablette verticale (2) pour décaler le poids de l'élément (1) et d'une paire d'unités de commande (4) dans sa direction.

5. Support selon la revendication 1, comprenant une seconde plaque (14) pour raccorder davantage lesdits bras verticaux (11, 11').

6. Support selon la revendication 1, dans lequel ledit panneau (3) comprend un nervurage (31) convenant à l'amélioration de l'adhérence avec une portion du tableau de bord d'un véhicule.

7. Support selon la revendication 1, comprenant également un distributeur (6) de fils et de faisceaux de fils, pour réaliser le raccordement électrique avec et entre les unités de commande sur le support, ledit distributeur (6) amenant les fils vers les unités de commande à partir du sommet et/ou de la base du panneau (3).

8. Véhicule comprenant un support pour une unité de commande selon l'une quelconque des revendications précédentes.
